# EUROPEAN PATENT SPECIFICATION

(11) **EP 3 869 885 B1**
(45) Date of publication and mention of the grant of the patent: **27.05.2026**
(21) Application number: 19881314.9
(22) Date of filing: 05.11.2019
(51) Int. Cl.: H04W 72/04, H04L 5/00

(54) **INFORMATION TRANSMISSION METHOD AND DEVICE**
INFORMATIONSÜBERTRAGUNGSVERFAHREN UND -VORRICHTUNG
PROCÉDÉ ET DISPOSITIF DE TRANSMISSION D'INFORMATIONS

(30) Priority: 05.11.2018 CN 201811309210
(43) Date of publication of application: 25.08.2021
(73) Proprietor: Huawei Technologies Co., Ltd., Longgang District Shenzhen, Guangdong 518129 (CN)
(72) Inventor: ZHANG, Di, Shenzhen, Guangdong 518129 (CN); ZHANG, Xu, Shenzhen, Guangdong 518129 (CN); LIU, Kunpeng, Shenzhen, Guangdong 518129 (CN)
(74) Representative: Gill Jennings & Every LLP
(86) International application number: PCT/CN2019/115764
(87) International publication number: WO 2020/094019

(56) References cited:
- WO-A1-2018/128376
- CN-A- 108 199 819
- ERICSSON: "Summary of 7.1.3.1 (DCI contents and formats)", vol. RAN WG1, no. Chengdu, China; 20181008 - 20181012, 9 October 2018 (2018-10-09), XP051519188, Retrieved from the Internet <URL:http://www.3gpp.org/ftp/tsg%5Fran/WG1%5FRL1/TSGR1%5F94b/Docs/R1%2D1811864%2Ezip> [retrieved on 20181009]
- NTT DOCOMO ET AL: "Offline summary for PDCCH structure and search space part 2", vol. RAN WG1, no. Chengdu, China; 20181008 - 20181012, 9 October 2018 (2018-10-09), pages 1 - 66, XP051519250, Retrieved from the Internet <URL:http://www.3gpp.org/ftp/tsg%5Fran/WG1%5FRL1/TSGR1%5F94b/Docs/R1%2D1811926%2Ezip> [retrieved on 20181009]
- NTT DOCOMO ET AL: "Offline summary for PDCCH structure and search space", vol. RAN WG1, no. Chengdu, China; 20181008 - 20181012, 9 October 2018 (2018-10-09), XP051519147, Retrieved from the Internet <URL:http://www.3gpp.org/ftp/tsg%5Fran/WG1%5FRL1/TSGR1%5F94b/Docs/R1%2D1811820%2Ezip> [retrieved on 20181009]
- VIVO: "Remaining issues on PDCCH CORESET", 3GPP DRAFT; R1-1806055, 25 May 2018 (2018-05-25), Busan, Korea, pages 1 - 4, XP051462320
- INTEL CORPORATION: "Remaining Issues on Beam Management", 3GPP DRAFT; R1-1810751, 12 October 2018 (2018-10-12), Chengdu, China, pages 1 - 15, XP051518155

## Description

### TECHNICAL FIELD

This application relates to the field of communications technologies, and in particular, to an information transmission method and an apparatus.

### BACKGROUND

For a control resource set associated with at least one common search space set, only when a terminal learns of a transmission configuration indicator (transmission configuration indicator, TCI for short) or quasi co-location (quasi-collocation, QCL for short) information that corresponds to the control resource set, the terminal may learn how to receive a control channel in the control resource set. However, currently, there is no method for determining the TCI or the QCL information that corresponds to the control resource set. ERICSSON: "Summary of 7.1.3.1 (DCI contents and formats)", 3GPP DRAFT; R1-1811864 SUMMARY OF 7.1.3.1 (DCI CONTENT), vol. RAN WG1, no. Chengdu, China; 20181008 - 20181012 9 October 2018 (2018-10-09) discusses DCI siz determination and other related issues. DOCOMO ET AL: "Offline summary for PDCCH structure and search space part 2", 3GPP DRAFT; R1-1811926 SUM AI_7.1.3.1 SEARCH SPACE2_R3, vol. RAN WG1, no. Chengdu, China; 20181008 - 20181012 9 October 2018 (2018-10-09), pages 1-66 relates to discussion points for PDCCH structure and search space. NTT DOCOMO ET AL: "Offline summary for PDCCH structure and search space", 3GPP DRAFT; R1-1811820, vol. RAN WG1, no. Chengdu, China; 20181008 - 20181012 9 October 2018 (2018-10-09) relates to discussion points for PDCCH structure and search space.

### SUMMARY

The present invention is defined by the appended claims. Embodiemnts and aspects not falling within the scope of the calims are exemplary and considered useful for understanding the invention. Embodiments of this application provide an information transmission method and an apparatus, to improve receiving performance of a terminal.

To achieve the foregoing objective, the embodiments of this application provide the following technical solutions.

According to a first aspect, an information transmission method is provided according to claim 1.

According to a second aspect, this application provides a communications apparatus according to claim 7. The communications apparatus has a function of implementing any method provided in the first aspect. The function may be implemented by hardware, or may be implemented by hardware executing corresponding software. The hardware or the software includes one or more units corresponding to the foregoing function. The communications apparatus may exist in a product form of a chip.

According to a third aspect, an information transmission method is according to claim 4.

For technical effects brought by any design manner in the second aspect, refer to technical effects brought by corresponding design manners in the first aspect. Details are not described herein again.

It should be noted that various possible implementations of any one of the foregoing aspects may be combined provided that the solutions are not contradictory.

### BRIEF DESCRIPTION OF DRAWINGS

FIG. 1 is a schematic diagram of a configuration of a BWP of a terminal;
FIG. 2 is a schematic diagram of a hardware structure of a communications apparatus according to an embodiment of this application;
FIG. 3 is a flowchart of an information transmission method according to an embodiment of this application;
FIG. 4 to FIG. 7 each are a schematic flowchart of a link failure detection method according to an embodiment of this application; and
FIG. 8 is a schematic composition diagram of a communications apparatus according to an embodiment of this application.

### DESCRIPTION OF EMBODIMENTS

The following describes the technical solutions in embodiments of this application with reference to accompanying drawings in the embodiments of this application. In the descriptions of this application, "/" means "or" unless otherwise specified. For example, A/B may represent A or B. The term "and/or" in this specification describes only an association relationship for describing associated objects and represents that there may be three relationships. For example, A and/or B may represent the following three cases: Only A exists, both A and B exist, and only B exists. In addition, unless otherwise specified, "a plurality of" in the descriptions of this application means two or more. In addition, to clearly describe the technical solutions in the embodiments of this application, terms such as "first" and "second" are used in the embodiments of this application to distinguish between same items or similar items that have basically same functions and purposes. A person skilled in the art may understand that the terms such as "first" and "second" do not constitute a limitation on a quantity or an execution sequence, and that the terms such as "first" and "second" do not indicate a definite difference.

The technical solutions in the embodiments of this application may be used in various communications systems, such as an orthogonal frequency-division multiple access (orthogonal frequency-division multiple access, OFDMA for short) system, a single-carrier frequency division multiple access (single carrier FDMA, SC-FDMA for short) system, and another system. The terms "system" and "network" can be interchanged with each other. The OFDMA system may implement wireless technologies such as evolved universal radio terrestrial access (evolved universal terrestrial radio access, E-UTRA for short) and ultra mobile broadband (ultra mobile broadband, UMB for short). The E-UTRA is an evolved version of a universal mobile telecommunications system (universal mobile telecommunications system, UMTS for short). The 3rd generation partnership project (3rd generation partnership project, 3GPP for short) uses a new release of E-UTRA in long term evolution (long term evolution, LTE for short) and various releases evolved based on LTE. A 5th generation (5th-generation, 5G for short) communications system or new radio (new radio, NR for short) is a next generation communications system under research. The 5G communications system includes a non-standalone (non-standalone, NSA for short) 5G mobile communications system and/or a standalone (standalone, SA for short) 5G mobile communications system. In addition, the communications systems may further be applicable to a future-oriented communications technology, and are all applicable to the technical solutions provided in the embodiments of this application. The foregoing communications system to which this application is applicable is merely an example for description, and a communications system to which this application is applicable is not limited thereto. In addition, the communications system may include another quantity of network apparatuses and another quantity of terminals.

Network elements in the embodiments of this application include a network apparatus and a terminal.

The network apparatus may be an apparatus that is deployed in a radio access network (radio access network, RAN for short) and that provides a wireless communication function for the terminal, for example, may be a base station. The network apparatus may include various forms of macro base stations, micro base stations (also referred to as small cells), relay stations, access points, and the like, and may also include various forms of control nodes, for example, network controllers. The control nodes may be connected to a plurality of base stations, and configure resources for a plurality of terminals covered by the plurality of base stations. In systems using different radio access technologies, a device having a base station function may have different names, for example, an eNB or an e-NodeB in LTE, or may be a base station or a transmission reception point in 5G or NR, for example, a gNB. This is not limited in this application.

Alternatively, the terminal in the embodiments of this application may be referred to as user equipment (user equipment, UE for short), a terminal device, an access terminal, a subscriber unit, a subscriber station, a mobile station, a remote station, a remote terminal, a mobile device, a user terminal, a wireless communications device, a user agent, or a user apparatus. Alternatively, the terminal may be an unmanned aerial vehicle, an internet of things (internet of things, IoT for short) device, a station (station, ST for short) in a wireless local area network (wireless local area networks, WLAN for short), or may be a cellular phone, a cordless phone, a session initiation protocol (session initiation protocol, SIP for short) phone, a wireless local loop (wireless local loop, WLL for short) station, a personal digital assistant (personal digital assistant, PDAfor short) device, a handheld device having a wireless communication function, a computing device or another processing device connected to a wireless modem, a vehicle-mounted device, or a wearable device (which may also be referred to as a wearable intelligent device). The terminal may alternatively be a terminal in a next generation communications system, for example, a terminal in 5G, a terminal in a future evolved PLMN, or a terminal in an NR communications system.

To make the embodiments of this application clearer, the following briefly describes some concepts in the methods provided in the embodiments of this application.

1. Control resource set (control resource set, CORESET for short) and search space set (Search space set)

In an LTE system, a physical downlink control channel (physical downlink control channel, PDCCH for short) occupies an entire frequency band in frequency domain, and occupies first one to three orthogonal frequency-division multiplexing (orthogonal frequency-division multiplexing, OFDM for short) symbols of each subframe in time domain. That is, a system only needs to notify a terminal of a quantity of OFDM symbols occupied by the PDCCH, and the terminal can determine a search space of the PDCCH.

However, in an NR system, because a bandwidth of the system is relatively large (where a maximum bandwidth may be 400 MHz), if the PDCCH still occupies the entire bandwidth, not only resources are wasted, but also blind detection is complex. In addition, to increase system flexibility, a start position of the PDCCH in time domain may also be configured. In other words, in the NR system, the terminal needs to learn of a position of the PDCCH in frequency domain and a position of the PDCCH in time domain, so as to successfully decode the PDCCH.

For convenience, in the NR system, information such as a frequency domain resource and a time domain resource (for example, consecutive OFDM symbols occupied by a CORESET in time domain) occupied by the PDCCH is carried in configuration information of the CORESET. Information such as a number of a start OFDM symbol of the search space in which the PDCCH is located and a search space monitoring periodicity is carried in configuration information of a search space set. The search space set is a set including one or more search spaces. One search space is a set of one or more PDCCH candidate (PDCCH candidate) control channels at a same aggregation level. The aggregation level refers to a quantity of control channel elements (control channel element, CCE for short) constituting the PDCCH candidate control channel. The search space set includes a UE search space set (UE search space set, USS for short) and a common search space set (common search space set, CSS for short).

The CORESET in this application may also be referred to as a control region (control region) or an enhanced physical downlink control channel (enhanced-physical downlink control channel, ePDCCH for short) set (set).

A network apparatus may configure one or more CORESETs for the terminal, and the network apparatus may send the PDCCH to the terminal on a resource indicated by any CORESET corresponding to the terminal. In addition, the network apparatus further needs to notify the terminal of another configuration associated with the CORESET, for example, the search space set. One CORESET may be associated with one or more search space sets, and one search space set can be associated with only one CORESET. The search space set associated with the CORESET is a search space set used to send the CORESET.

Optionally, currently, the CORESET includes a CORESET #0 to a CORESET #11. A CORESET #i is a CORESET whose identifier is i, and may also be denoted as a CORESETi. The CORESET #0 may be used to schedule system information (system information), and may be further used to schedule, in addition to the system information, one or more of the following information: remaining minimum system information (remaining minimum system information, RMSI for short, which may also be referred to as a SIB 1), other system information (other system information, OSI for short, which may also be referred to as an SI message), a paging message (paging message), and a random access message (for example, a message 2 (Message2), a message 4 (Message4), or the like).

Time-frequency resource positions occupied by the CORESET #1 to the CORESET #11 are indicated by the network apparatus to the terminal by using radio resource control (radio resource control, RRC for short) signaling, and the RRC signaling includes a "tci-PresentInDCI" field. A "tci-PresentInDCI" field is used to indicate whether a TCI field (field) exists in downlink control information (downlink control information, DCI for short), the TCI field is used to carry a TCI, and the TCI is used to indicate QCL information of a physical downlink shared channel (physical downlink shared channel, PDSCH for short). Therefore, the network apparatus may indicate, to the terminal by using the field, whether DCI (where the DCI is included in a PDCCH) sent on a resource indicated by each CORESET includes a TCI. A time-frequency resource position occupied by the CORESET #0 is indicated by the network apparatus to the terminal by using a master information block (master information block, MIB for short) or a system information block type 1 (system information block type 1, SIB 1 for short). However, the MIB or the SIB 1 does not include the "tci-PresentInDCI" field. Therefore, the network apparatus cannot indicate, by using the MIB or the SIB 1, whether DCI sent on a resource indicated by the CORESET #0 includes a TCI field.

Table 1 shows a correspondence between a CORESET and a configuration manner of configuring a time-frequency resource position occupied by the CORESET.

**Table 1**

| CORESET | Configuration manner of a time-frequency resource position occupied by a CORESET |
|---|---|
| CORESET #0 | By using a MIB or a SIB 1 (excluding a "tci-PresentInDCI" field) |
| CORESET #1 to CORESET #11 | By using RRC signaling or cell specific signaling (both including a "tci-PresentInDCI" field) |

Each of the CORESET #0 to the CORESET #11 may be associated with a USS or a CSS. In the embodiments of this application, for ease of description, a CORESET in the CORESET #1 to the CORESET #11 that is associated with the CSS is referred to as a common CORESET (common CORESET). It should be understood that, in this application, the common CORESET is a CORESET that is different from the CORESET #0 and that is used to schedule broadcast information.

For a configuration manner of a PDCCH carried on a resource indicated by a CORESET associated with different types of search space sets and a TCI or QCL information of a PDSCH scheduled by the PDCCH, refer to Table 2.

**Table 2**

| CORESET | Configuration manner of a TCI or QCL information of a PDSCH scheduled by a PDCCH carried on a resource indicated by a CORESET | Configuration manner of a TCI or QCL information of a PDCCH carried on a resource indicated by a CORESET |
|---|---|---|
| CORESET #0 (Associated with a CSS) | No configuration is required | Configured by using a MAC CE |
| CORESET #0 (Associated with a USS) | - | Configured by using a MAC CE |
| CORESET #1 to CORESET #11 (If it is not a common CORESET, associated with a USS) | Manner 1 (See the following specification) | Manner 2 (See the following specification) |
| CORESET #1 to CORESET #11 (If it is a common CORESET, associated with a CSS) | - | - |

| | | |
|---|---|---|
| Note: MAC CE is short for media access control control element (media access control control element). | | |

Manner 1 and Manner 2 in Table 2 are as follows:
Manner 1: The network apparatus configures, for the terminal by using the RRC signaling, M TCIs of the PDSCH, and configures, for the terminal by using the MAC CE, 2^N candidate TCIs of the PDSCH that are used for DCI indication, where the 2^N candidate TCIs are a subset of the M TCIs, the 2^N candidate TCIs are shared in an entire bandwidth part (bandwidth part, BWP for short), and DCI dynamically indicates that one of the 2^N candidate TCIs is used to receive the PDSCH.
Manner 2: The network apparatus configures, for the terminal by using the RRC signaling, 2^N candidate TCIs of the PDSCH, where the 2^N candidate TCIs are a subset of the M TCIs, the 2^N candidate TCIs are shared in an entire BWP, and the MAC CE dynamically indicates that one of the 2^N candidate TCIs is used to receive the PDSCH.

According to the foregoing table, it can be learned that:
(1) When the CORESET #0 is associated with the USS, because the MIB or the SIB 1 does not include the "tci-PresentInDCI" field, whether the DCI includes a TCI or QCL information cannot be indicated.

In the conventional technology, a PDSCH scheduled by a PDCCH carried on a resource indicated by the CORESET #0 can only use a same TCI or same QCL information as that of the PDCCH. If the CORESET #0 is associated with the CSS, no abnormality occurs. However, when the CORESET #0 is associated with the USS, because the TCI or the QCL information of the PDSCH cannot be indicated, the terminal can receive data only by using a wide beam. Consequently, communication efficiency of the terminal is reduced.

(2) Currently, how to indicate the TCI or the QCL information of the PDCCH carried on the resource indicated by the common CORESET is not specified.

(3) Currently, how to indicate the TCI or the QCL information of the PDSCH scheduled by the PDCCH carried on the resource indicated by the common CORESET is not specified.

### 2. USS and CSS

The USS is a search space set specific to a terminal, and the CSS is a common search space set.

The terminal may detect a DCI format (format) 0_1 and a DCI format 1_1, or a DCI format 1_0 and a DCI format 0_0 in the USS. The DCI format 0_1 and/or the DCI format 0_0 are/is used for uplink data scheduling. The DCI format 1_1 and/or the DCI format 1_0 are/is used for downlink data scheduling. The DCI format 1_1 may include a TCI field.

The terminal may detect, in the CSS, one or more types of information: remaining system information (remaining system information, RMSI), other system information (other system information, OSI for short), a paging (Paging) message, a random access message (including a message 2 (Message2), a message 4 (Message4), or the like.)

There may be a plurality of types of PDCCH CSSs, for example, a type 0, a type 0A, a type 1, and a type 2. Different types of PDCCH CSSs may correspond to different scrambling manners. The scrambling manner is a scrambling manner for a cyclic redundancy check (cyclic redundancy check, CRC for short) of DCI carried on a PDCCH. For details, refer to Table 3.

**Table 3**

| Search space set of a PDCCH | Scrambling manner for a CRC of DCI carried on a PDCCH |
|---|---|
| Type 0-PDCCH CSS (Type0-PDCCH common search space set) | SI-RNTI |
| Type 0A-PDCCH CSS (Type0A-PDCCH common search space set) | SI-RNTI |
| Type 1-PDCCH CSS | RA-RNTI and/or TC-RNTI |
| (Type1-PDCCH common search space set) | |
| Type 2-PDCCH CSS (Type2-PDCCH common search space set) | P-RNTI |
| USS | At least one of a C-RNTI, an MCS-C-RNTI, or a CS-RNTI |

Note: An RNTI is short for a radio network temporary identifier (radio network temporary identifier), the SI-RNTI is short for a system information RNTI (system information RNTI), the RA-RNTI is short for a random access RNTI (random access RNTI), the TC-RNTI is short for a temporary cell RNTI (temporary cell RNTI), the P-RNTI is short for a paging RNTI (paging RNTI), the C-RNTI is short for a modulation and coding scheme RNTI (modulation and coding scheme RNTI), the MCS-C-RNTI is short for a modulation and coding scheme cell specific RNTI (Modulation and Coding Scheme cell specific RNTI), and the CS-RNTI is short for a configured scheduling RNTI (configured scheduling RNTI).

### 3. QCL

The QCL may also be referred to as a quasi co-site or a quasi co-location. QCL information is used to indicate a QCL relationship between two reference signals, and spatial parameters of two reference signals that meet the QCL relationship are the same. In other words, received beam information of the two reference signals that meet the QCL relationship is the same. The QCL information may be indicated by using a TCI. The spatial parameter may also be referred to as a spatial specific parameter, a spatial correlation parameter, or the like.

Four QCL types are defined in an existing standard: a QCL-type (types) A, QCL-type B, a QCL-type C, and a QCL-type D. A network apparatus may simultaneously configure one or more types of QCL for a terminal. For example, the network apparatus may configure both a QCL-type A and a QCL-type D, or a QCL-type C and a QCL-type D for the terminal. For specific meanings of different types of QCL, refer to the conventional technology. Details are not described herein again.

### 4. TCI

The TCI is used to indicate QCL information of a PDCCH (which may also be referred to as a CORESET)/PDSCH, and may be specifically used to indicate a reference signal that meets a QCL relationship with a demodulation reference signal (demodulation reference signal, DMRS for short) of the PDCCH/PDSCH. In this case, the terminal may receive the PDCCH/PDSCH by using a spatial parameter that is the same as or similar to a spatial parameter of the reference signal.

The TCI may specifically indicate, by using a reference signal index, the reference signal that meets the QCL relationship with the DMRS of the PDCCH/PDSCH. In addition, the TCI may further indicate a QCL type.

### 5. BWP

The BWP is a subset in a bandwidth of a terminal, and includes consecutive physical resource blocks (physical resource block, PRB for short) in frequency domain. A minimum granularity of the BWP in frequency domain is one PRB.

When the terminal in idle mode accesses a cell or a broadband carrier, a BWP used when the terminal initially accesses the cell or the broadband carrier is referred to as an initial BWP. In other words, the terminal performs random access on the initial BWP. When a service arrives at the terminal, a network apparatus schedules the terminal from the initial BWP to a BWP whose bandwidth matches the service of the terminal, and may indicate, by using higher layer signaling or layer 1 signaling, the BWP in which the terminal currently works. The terminal may send and receive data and/or a reference signal in the BWP. The BWP is referred to as an active BWP. In a case of a single carrier, the network apparatus may configure one or more downlink/uplink BWPs for the terminal. However, one terminal has only one active BWP at a same moment, and the terminal can receive data/a reference signal or send data/a reference signal only on the active BWP.

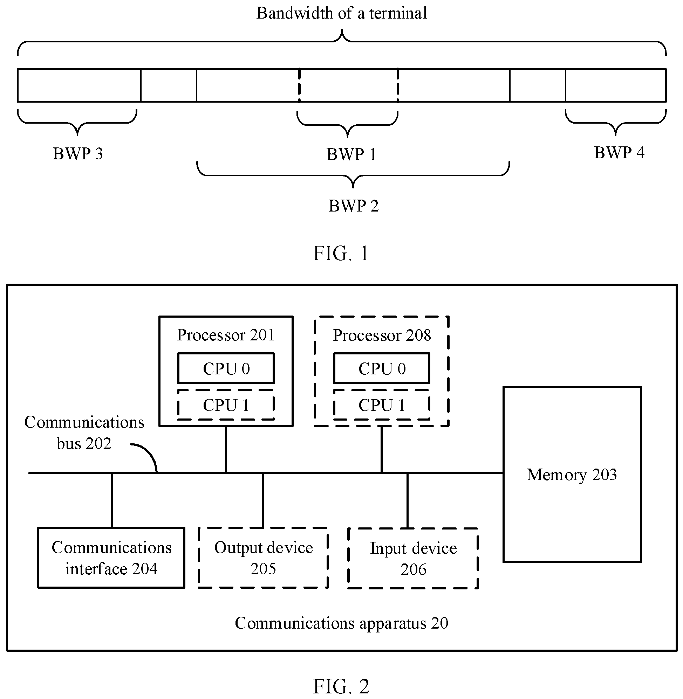

The BWPs configured by the network apparatus for the terminal may be independent of each other, or may partially overlap. For example, as shown in FIG. 1, the network apparatus configures four BWPs for the terminal, and a BWP 1 and a BWP 2 in the four BWPs partially overlap in frequency domain. The BWPs configured by the network apparatus for the terminal may include an initial BWP, or may not include an initial BWP.

Dynamic switching of the BWPs is supported in a current communications system. The network apparatus indicates, by using DCI or RRC signaling, the terminal to perform BWP switching. The DCI is located in a current BWP, and a size of a frequency domain resource allocation information field of the DCI is determined by using a bandwidth of the current BWP. There is an information field of a bandwidth part indicator (bandwidth part indicator) in the DCI, and the information field is used to indicate an ID number of a BWP active by the terminal. When a BWP ID number indicated by the information field is different from an ID number of a current active BWP of the terminal (that is, a current BWP for transmitting the DCI), the terminal needs to perform switching from the current BWP to the BWP indicated by the DCI.

### 6. SS/PBCH block (synchronous signal/PBCH block)

The SS/PBCH block is a synchronization signal broadcast channel block. The SS/PBCH block may also be referred to as an SSB. The PBCH is an abbreviation of a physical broadcast channel (physical broadcast channel). The SSB includes at least one of a primary synchronization signal (primary synchronization signal, PSS for short), a secondary synchronization signal (secondary synchronization signal, SSS for short), and the PBCH. The SSB is a signal mainly used for cell searching, cell synchronization, and carrying broadcast information.

In one case, information about a CORESET #0 is configured by using a MIB, and MIB information is carried on a PBCH. Therefore, 8 bits in the MIB information is used to indicate a possible time-frequency resource position occupied by a CORESET of a first control resource. QCL information and a frequency domain start position of the CORESET #0 are obtained by using an index of an SSB corresponding to the MIB information, and a detected time-domain position (monitoring occasions) of a search space set associated with the CORESET #0 may further be obtained. Alternatively, information such as a symbol (ofdm symbol) position of a search space set in a slot (slot) may further be obtained, where the symbol position includes a position, in a slot, of an OFDM symbol having a smallest number in time domain in the CORESET associated with the search space set. When the terminal finds that the CORESET #0 cannot be detected, the terminal may obtain information about another CORESET #0 by detecting another SSB.

Optionally, one SSB is associated with one CORESET #0, and the terminal detects a CSS on the CORESET #0 associated with the SSB. Optionally, the information about the CORESET #0 may be further configured by using a SIB 1 and/or other system information.

One CORESET #0 may correspond to one SSB, and the terminal may obtain the CORESET #0 by detecting the SSB.

### 7. PDCCH-Config-Common (PDCCH-Config-Common), PDSCH-Config-Common, PDCCH-Config (PDCCH-Config), and PDSCH-Config

A network apparatus may configure related information in a BWP for a terminal by using RRC signaling or cell specific (Cell specific) signaling, where the RRC signaling or cell specific (Cell specific) signaling may include a BWP common field and a BWP dedicated field, the BWP common field further includes a pdcch-Config-Common field and a pdsch-Config-Common field, and the BWP dedicated field includes a pdcch-Config field and a pdsch-Config field. The BWP common field does not include a TCI related field, and the BWP dedicated field may include a TCI related field. A TCI related field included in the pdcch-Config field in the BWP dedicated field is used to indicate a TCI of a PDCCH, and a TCI related field included in the pdsch-Config field in the BWP dedicated field is used to indicate a TCI of a PDSCH.

A PDCCH for scheduling broadcast information may be carried on a resource indicated by a CORESET #0, or may be carried on a resource indicated by a common CORESET. The network apparatus may configure the common CORESET for the terminal by using the PDCCH-Config-Common field. The PDCCH-Config-Common field may be carried in a SIB 1 or the RRC signaling. The network apparatus may configure the CORESET #0 by using a MIB, the SIB 1 or the PDCCH-Config-Common field. The resources indicated by the CORESET #0 and the common CORESET may carry the PDCCH for scheduling broadcast information.

It should be understood that spatial parameter information in this application may be QCL information, a TCI, or spatial relation information (spatial relation info).

A TCI or QCL information of a control channel is bound to a CORESET. In other words, all PDCCHs carried on a specific CORESET use a TCI or QCL information configured for the CORESET regardless of a search space in which the PDCCH is detected.

In the embodiments of this application, for ease of description, that a PDCCH carried on a CORESET indicates a time domain resource and/or a frequency domain resource and/or a space domain resource of a PDSCH is described as that the PDCCH schedules the PDSCH.

To resolve the technical problem provided in this application, the embodiments of this application provide a communications apparatus, and the communications apparatus may be specifically a network apparatus or a terminal in the following. For a schematic diagram of a hardware structure of a communications apparatus, refer to FIG. 2. FIG. 2 is a schematic diagram of a hardware structure of a communications apparatus 20, and the communications apparatus 20 includes at least one processor 201, a communications bus 202, a memory 203, and at least one communications interface 204.

The processor 201 may be a general-purpose central processing unit (central processing unit, CPU for short), a microprocessor, an application-specific integrated circuit (application-specific integrated circuit, ASIC for short), or one or more integrated circuits configured to control program execution in the solutions in this application.

The communications bus 202 may include a path for transmitting information between the foregoing components.

The communications interface 204 may be any apparatus such as a transceiver, and is configured to communicate with another device or communications network, such as the Ethernet, a RAN, or a WLAN.

The memory 203 may be a read-only memory (read-only memory, ROM for short) or another type of static storage device capable of storing static information and instructions, a random access memory (random access memory, RAM for short) or another type of dynamic storage device capable of storing information and instructions, or may be an electrically erasable programmable read-only memory (electrically erasable programmable read-only memory, EEPROM for short), a compact disc read-only memory (compact disc read-only memory, CD-ROM for short) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium that is capable of carrying or storing expected program code in a form of instructions or a data structure and that can be accessed by a computer, but this application is not limited thereto. The memory may exist independently, and is connected to the processor through the bus. The memory may be alternatively integrated with the processor.

The memory 203 is configured to store application program code for executing the solutions in this application, and the processor 201 controls execution. The processor 201 is configured to execute the application program code stored in the memory 203, to implement the method provided in the following embodiments of this application.

During specific implementation, in an embodiment, the processor 201 may include one or more CPUs, for example, a CPU 0 and a CPU 1 in FIG. 2.

During specific implementation, in an embodiment, the communications apparatus 20 may include a plurality of processors, for example, the processor 201 and a processor 208 in FIG. 2. Each of these processors may be a single-core (single-CPU) processor, or may be a multi-core (multi-CPU) processor. The processor herein may refer to one or more devices, circuits, and/or processing cores configured to process data (for example, computer program instructions).

During specific implementation, in an embodiment, the communications apparatus 20 may further include an output device 205 and an input device 206.

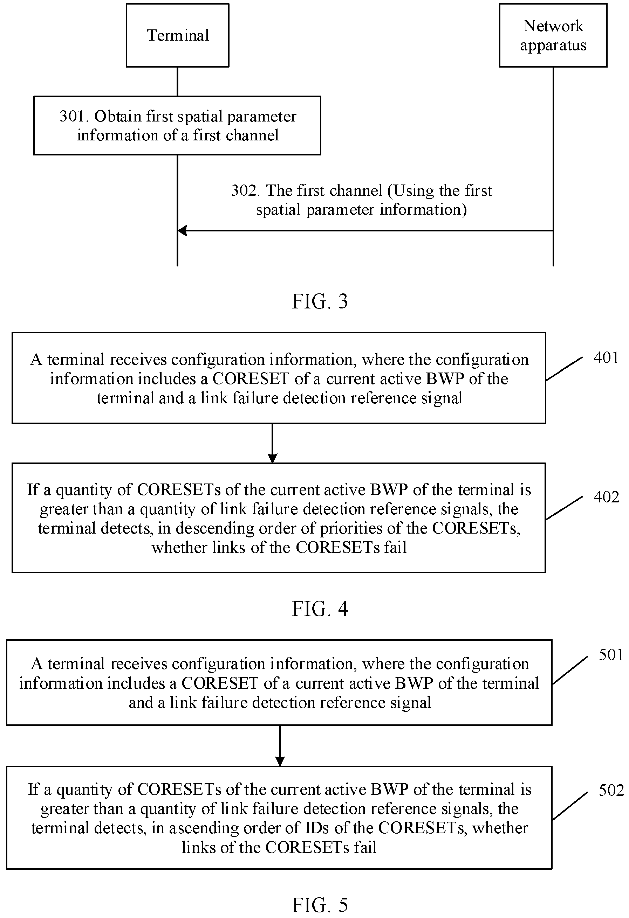

An embodiment of this application further provides an information transmission method. As shown in FIG. 3, the method includes the following steps.

301. A terminal obtains first spatial parameter information of a first channel.

The first channel may be a control channel in a specific control resource set. The first channel may be a PDCCH. The spatial parameter information may be QCL information, a TCI, or spatial relation information (spatial relation info).

During specific implementation of step 301, a network apparatus may indicate the first spatial parameter information of the first channel to the terminal. Correspondingly, the terminal receives the first spatial parameter information of the first channel from the network apparatus.

302. The network apparatus sends the first channel to the terminal by using the first spatial parameter information. Correspondingly, the terminal receives the first channel based on the first spatial parameter information.

According to the method provided in this embodiment of this application, the spatial parameter information (for example, the QCL information, TCI, or spatial correlation information) corresponding to the first channel (for example, the PDCCH) may be determined.

In a possible implementation (denoted as an implementation 1), the first channel is one of a plurality of candidate control channels in a first CORESET, and the first CORESET is configured by using a MIB, a SIB 1, or a PDCCH-Config-Common parameter. The PDCCH-Config-Common is a parameter in cell specific signaling (for example, a SIB) or higher layer signaling (for example, RRC).

In the implementation 1, because the first CORESET is configured by using the MIB, the SIB 1, or the PDCCH-Config-Common parameter, the first CORESET is a CORESET #0 or a common CORESET. In other words, the first spatial parameter information that is of the first channel and that is obtained by the terminal is spatial parameter information of the CORESET #0 or the common CORESET.

In the implementation 1, this application provides a method for indicating the spatial parameter information of the CORESET #0 or the common CORESET.

In a possible implementation (denoted as an implementation 2), the first channel is one of a plurality of candidate control channels in a CSS, and a type of the CSS is a type 0 (Type 0 CSS). Alternatively, the first channel is one of a plurality of candidate control channels in a UE-specific search space set. The common search space set and/or the UE-specific search space set are/is associated with the first CORESET.

If the first channel is one of a plurality of candidate control channels in a PDCCH CSS, and a type of the PDCCH CSS is the type 0, a CRC of DCI carried on the first channel is scrambled by a SI-RNTI. The terminal may determine, based on a scrambling manner of the DCI, that the first channel schedules the SIB 1 in this case, and the first spatial parameter information that is of the first channel and that is obtained by the terminal may be spatial parameter information of a CORESET #0.

In the implementation 2, this application provides a method for indicating the spatial parameter information of the CORESET #0.

In a possible implementation (denoted as an implementation 3), the first channel is one of a plurality of candidate control channels in the first CORESET, one of the plurality of candidate control channels may be used to schedule broadcast information, and the broadcast information includes at least one of the following information: system information, remaining minimum system information, other system information, a paging message, and a random access message.

Because the first channel is used to schedule the broadcast information, it can be learned that the first channel is a PDCCH.

In the implementation 3, the first spatial parameter information that is of the first channel and that is obtained by the terminal may be spatial parameter information of a PDCCH that is carried on a CORESET #0 and that is used to schedule broadcast information, or may be spatial parameter information of a PDCCH that is carried on a common CORESET and that is used to schedule broadcast information.

In a possible implementation (denoted as an implementation 4), the first channel carries DCI, and a format of the DCI is a first DCI format. When the terminal meets a first condition, the first DCI format includes a first field (that is, the TCI field in the foregoing description) used to indicate spatial parameter information. According to the invention, the first condition is

Condition (1): A second CORESET of a current active BWP of the terminal enables the first field, where the second CORESET includes at least one CORESET other than a first CORESET in CORESETs of the current active BWP of the terminal.

The first DCI format may be a DCI format 1_1, or may be another DCI format that may include the first field. It should be noted that one piece of DCI may include the first field (that is, a quantity of bits occupied by the first field is not 0), or may not include the first field (that is, a quantity of bits occupied by the first field is 0), and whether the DCI includes the first field is indicated by the network apparatus. In this embodiment of this application, when the terminal meets the first condition, the DCI includes the first field.

In the condition (1), the second CORESET is all CORESETs of the current active BWP of the terminal other than the first CORESET; the second CORESET is a CORESET with a smallest identifier in all CORESETs of the current active BWP of the terminal other than the first CORESET; or the second CORESET is a CORESET that is associated with a USS and that is of the current active BWP of the terminal other than the first CORESET.

Further, the CORESET that is associated with a USS and that is of the current active BWP of the terminal other than the first CORESET may be specifically that: The second CORESET is a CORESET with a smallest identifier in all CORESETs that are associated with the USS and that are of the current active BWP of the terminal other than the first CORESET; or the second CORESET is a CORESET associated with a USS with a smallest identifier in all CORESETs of the current active BWP of the terminal other than the first CORESET.

If the current active BWP of the terminal is a first BWP, when the implementation 4 is used for the network apparatus, the network apparatus may perform the following actions:

(11) The network apparatus sends configuration information to the terminal, where the configuration information includes at least one CORESET of the first BWP, and the at least one CORESET includes a CORESET #0.

(12) The network apparatus sends DCI to the terminal on the CORESET #0.

If the second CORESET of the first BWP enables the first field, or the first BWP includes only the CORESET #0, or the CORESET #0 is associated with a USS, or the CRC of the DCI is scrambled by at least one of the C-RNTI, the MCS-C-RNTI, or the CS-RNTI, the DCI sent by the network apparatus to the terminal includes the first field. In other words, the DCI on the CORESET #0 of the first BWP enables the first field.

If the current active BWP of the terminal is the first BWP, and the CORESET #0 is a CORESET #0 in CORESETs of the current active BWP of the terminal, when the implementation 4 is used for the terminal, the terminal may perform the following actions:

(21) The terminal receives, on the CORESET #0, the DCI from the network apparatus.

(22) The terminal determines whether the DCI includes the first field.

During specific implementation of step (22), when determining that one or more of the foregoing conditions (1) to (4) are met, the terminal determines that the DCI includes the first field.

After step (22), the terminal may receive a PDSCH based on spatial parameter information of the first field in the received DCI.

In addition, in the foregoing embodiment, if the first channel schedules a second channel, when the terminal meets neither of the condition (1) to the condition (4), spatial parameter information of the second channel may be the same as the spatial parameter information of the first channel. The second channel may be a PDSCH. Optionally, the second channel may alternatively be a PUSCH.

Optionally, when the DCI carried on the first channel is scrambled by at least one of the C-RNTI, the MCS-C-RNTI, or the CSI-RNTI, and a TCI field in the DCI is enabled, the second channel receives a PDSCH by using a TCI indicated in a DCI channel (optionally, in this case, a scheduling offset needs to be greater than a preset threshold). Alternatively, when the DCI carried on the first channel is scrambled by at least one of a SI-RNTI, a RA-RNTI, a P-RNTI, or a TC-RNTI, the terminal receives a PDSCH based on a TCI or QCL information associated with the first CORESET. In the optional method, a method for indicating a TCI or QCL information of a PDSCH scheduled by a PDCCH carried on a CORESET configured by using a MIB, a SIB 1 or a PDCCH common configuration parameter is provided.

In the implementation 4, when the first CORESET is the CORESET #0, the first CORESET may be associated with the USS. It can be learned from the foregoing description that when the CORESET #0 is associated with the USS, communication efficiency of the terminal is reduced by using an existing method. However, in the implementation 4, when the CORESET #0 is associated with the USS, the DCI in the first DCI format carries the first field used to indicate the spatial parameter information (for example, QCL information, a TCI, or spatial correlation information). The terminal may determine, by using the first field, a narrow beam to receive data, to improve communication efficiency of the terminal.

In a possible implementation (denoted as an implementation 5), the first CORESET is a common CORESET, and a CRC of DCI carried on the first channel is scrambled by at least one of the following RNTIs: a SI-RNTI, a RA-RNTI, a TC-RNTI or a P-RNTI.

In the implementation 5, according to a scrambling manner of the CRC of the DCI carried on the first channel, it can be learned that a PDCCH is used to schedule broadcast information. In this case, this application provides a method for indicating a TCI or QCL information of a PDCCH carried on a resource indicated by a common CORESET.

It can be learned from the implementation 5 that, because the PDCCH is used to schedule the broadcast information, it may be understood that the first channel is carried on a time-frequency resource determined by the first CORESET and a second search space set associated with the first CORESET, and the second search space set is at least one of the following search space sets: a type 0A-PDCCH CSS, a type 1-PDCCH CSS, and a type 2-PDCCH CSS.

In a possible implementation (denoted as an implementation 6), the first spatial parameter information is the same as spatial parameter information of a third CORESET, and the third CORESET is a CORESET #0.

If the implementation 5 and the implementation 6 are combined, spatial parameter information of the PDCCH carried on the common CORESET is spatial parameter information of the PDCCH carried on the CORESET #0. It can be learned from the foregoing embodiment that the spatial parameter information of the PDCCH carried on the CORESET #0 may be indicated by using MAC CE signaling.

In a possible implementation (denoted as an implementation 7), the first spatial parameter information is configured by RRC signaling and/or MAC CE signaling.

It can be learned from the foregoing embodiment that how to configure the spatial parameter information of the PDCCH carried on the common CORESET is not specified currently. If the implementation 5 and the implementation 7 are combined, in the implementation 7, a method for configuring the spatial parameter information of the PDCCH carried on the common CORESET is provided.

In the implementation 7, the spatial parameter information indicated by the RRC signaling or the MAC CE signaling is a subset of spatial parameter information configured by a PDSCH-config (PDSCH-config) parameter. The PDSCH-config is a parameter in higher layer signaling.

The common CORESET is configured by using a PDCCH-config-common field, and the PDSCH-config (PDSCH-config) parameter and the PDCCH-config-common are on one BWP.

The spatial parameter information configured by the PDSCH-config parameter is for a specific terminal. Therefore, to make the configuration applicable to the common CORESET, optionally, the first spatial parameter information includes only a channel state information reference signal (channel state information reference signal, CSI-RS for short) or an SSB, and the CSI-RS has a QCL relationship with at least one SSB. To be specific, spatial parameter information used by the terminal when the terminal receives the CSI-RS or the SSB is the spatial parameter information used when the terminal receives the PDCCH. Because the SSB is a cell specific reference signal, the common CORESET used to schedule broadcast information uses spatial parameter information of the SSB to enhance coverage, and optionally, to further enable as many other terminals as possible in a cell to receive the broadcast information.

The CSI-RS may be a common CSI-RS, or may be a tracking reference signal (tracking reference signal or CSI-RS for tracking, TRS for short). The TRS may be further referred to as a time-frequency tracking reference signal, and the TRS is a reference signal used for fine time-frequency synchronization. The TRS is a type of the CSI-RS. The common CSI-RS in this embodiment of this application is a CSI-RS other than the TRS.

Optionally, when the first channel is a PDCCH detected in a USS, a TCI field in the DCI is enabled. Alternatively, when the first channel is a PDCCH detected in a CSS, the terminal does not enable a TCI field in the DCI (optionally, the terminal receives a PDSCH based on a TCI or QCL information associated with a first CORESET). Optionally, a format of the DCI is a DCI format 1_1.

In a possible implementation (denoted as an implementation 8), the first channel schedules a second channel, where the second channel is used to carry broadcast information, and spatial parameter information of the second channel is second spatial parameter information. The broadcast information includes at least one of the following information: system information, remaining minimum system information, other system information, a paging message, and a random access message.

It can be learned from the implementation 8 that the second channel may be a PDSCH. In the implementation 8, the first control resource set may be a common CORESET. In this case, this application provides a method for indicating a TCI or QCL information of a PDSCH scheduled by a PDCCH carried on a resource indicated by the common CORESET.

In a possible implementation (denoted as an implementation 9), the second spatial parameter information is the same as spatial parameter information of a fourth CORESET, and the fourth CORESET is a CORESET #0. Optionally, the fourth CORESET may be a CORESET in a slot (slot) closest to the second channel.

If the implementation 5 and the implementation 9 are combined, the spatial parameter information of the PDSCH scheduled by the common CORESET is the same as the spatial parameter information of the CORESET #0.

In a possible implementation (denoted as an implementation 10), the second spatial parameter information is the same as the first spatial parameter information, or the second spatial parameter information is the same as the spatial parameter information of the first CORESET. Optionally, the first CORESET may be a common CORESET in a slot closest to the second channel.

Optionally, when a CORESET #0 exists in a current active BWP, the PDSCH uses QCL information or a TCI of the CORESET #0. Otherwise, when a common CORESET exists in a current active BWP, a PDSCH uses QCL information or a TCI of the common CORESET. It should be understood that, in this application, a PDSCH used to carry broadcast information may be configured by using a PDSCH-Config-Common field. Optionally, the field may be carried in cell specific signaling (SIB signaling) or higher layer signaling (RRC signaling).

If the implementation 5 and the implementation 10 are combined, the spatial parameter information of the PDSCH scheduled by the common CORESET is the same as spatial parameter information of the common CORESET (or a PDCCH scheduled by the common CORESET).

According to the method provided in this embodiment of this application, when the CORESET #0 is associated with the USS, a method for indicating the PDSCH scheduled by the CORESET #0 is provided for the terminal. In this way, the terminal can receive data by using a narrow beam, to improve communication efficiency of the terminal. In addition, this embodiment of this application further provides a method for indicating the TCI or the QCL information of the PDCCH scheduled by the common CORESET and the TCI or the QCL information of the PDSCH scheduled by the common CORESET. In this way, the terminal can determine the QCL information or the TCI to be used to receive the PDCCH scheduled by the common CORESET and the PDSCH scheduled by the common CORESET.

With emergence of intelligent terminals, especially emergence of video services, current spectrum resources can hardly satisfy explosively growing capacity requirements of users. A high frequency band with a larger available bandwidth, especially a millimeter-wave band, gradually becomes a candidate frequency band of a next generation communications system. In addition, in a modem communications system, a multi-antenna technology is usually used to increase a capacity and coverage of the system, or improve user experience. Another advantage of using the high frequency band is that a size of a configured multi-antenna can be greatly reduced, to facilitate site obtaining and deployment of more antennas. However, it is different from an operating frequency band of an existing system such as an LTE system that, the high frequency band causes a larger path loss, and especially, a loss in radio propagation further becomes larger due to factors such as atmosphere and vegetation.

To overcome the larger propagation loss, a signal transmission mechanism that is based on a beamforming technology is applied, with the intention of using a relatively high antenna gain to compensate for the loss in a signal propagation process. Beamforming signals may include a broadcast signal, a synchronization signal, a cell specific RS, and the like. However, an obstacle exists in a communication process, and a diffraction capability of a signal on a high frequency channel is poor. Consequently, signal transmission cannot be continued if a current serving beam is blocked. To prevent a link failure caused by an obstacle of the beam, a corresponding mechanism needs to be introduced to detect a link.

To detect the link, the network apparatus needs to configure, for the terminal, an RS set used for link failure detection. Currently, the set includes a maximum of two RSs, and one BWP may be configured with a maximum of three CORESETs. Generally, one RS is used to detect a link of one CORESET. Optionally, the link of the CORESET is a link between the terminal and the network apparatus based on spatial parameter information of the CORESET. In this case, if a quantity of CORESETs included in the BWP is greater than a quantity of link failure detection reference signals (beam failure detection resource signal, BFD RS for short), a specific implementation solution to perform link failure detection is not provided in the conventional technology. Therefore, an embodiment of this application provides a link failure detection method. The method may be implemented in any one of the following manners:

### Manner 1

Refer to FIG. 4. The manner 1 includes the following steps.

401. A terminal receives configuration information, where the configuration information includes a CORESET of a current active BWP of the terminal and a BFD RS.

402. If a quantity of CORESETs of the current active BWP of the terminal is greater than a quantity of BFD RSs, the terminal detects, in descending order of priorities of the CORESETs, whether links of the CORESETs fail. A priority of a CORESET associated with a CSS is higher than a priority of a CORESET associated with a USS, and a priority of a CORESET with a smaller ID in CORESETs associated with the USS is higher than a priority of a CORESET with a larger ID in the CORESETs associated with the USS.

In the manner 1, a sequence of the CORESETs for performing link failure detection is determined based on the priorities of the CORESETs, so that the terminal can determine a link of which CORESET is to be detected if the quantity of CORESETs of the current active BWP is greater than the quantity of BFD RSs. By preferentially detecting a CORESET with a high priority, timely recovery of a link with important information is preferentially ensured, and system performance can be ensured.

### Manner 2

Refer to FIG. 5. The manner 2 includes the following steps.

501. A terminal receives configuration information, where the configuration information includes a CORESET of a current active BWP of the terminal and a BFD RS.

502. If a quantity of CORESETs of the current active BWP of the terminal is greater than a quantity of BFD RSs, the terminal detects, in ascending order of IDs of the CORESETs, whether links of the CORESETs fail.

If a network apparatus does not configure a TCI in DCI or configures a TCI but a scheduling offset is less than a preset threshold, the terminal receives a PDSCH by using a TCI scheduled by a CORESET with a smallest ID. Therefore, a CORESET with a smaller ID is more important to a system, and the CORESET with a smaller ID is preferentially detected to improve system stability. The scheduling offset is a time offset between the reception by the terminal of the DL DCI and the corresponding PDSCH that is scheduled by the terminal (the time offset between the reception of the DL DCI and the corresponding PDSCH).

### Manner 3

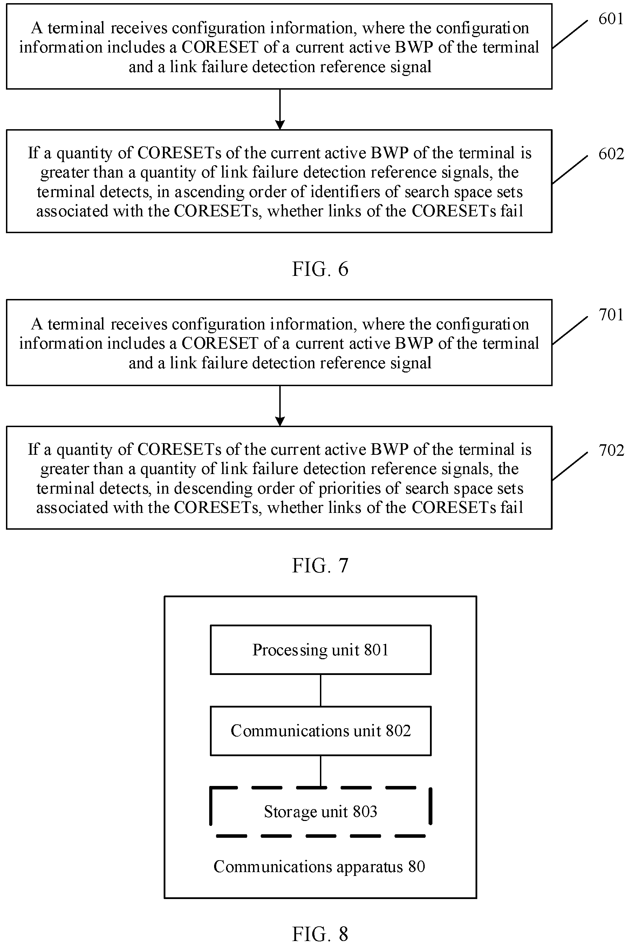

Refer to FIG. 6. The manner 3 includes the following steps.

601. A terminal receives configuration information, where the configuration information includes a CORESET of a current active BWP of the terminal and a BFD RS.

602. If a quantity of CORESETs of the current active BWP of the terminal is greater than a quantity of BFD RSs, the terminal detects, in ascending order of identifiers of search space sets associated with the CORESETs, whether links of the CORESETs fail.

If a network apparatus does not configure a TCI in DCI or configures a TCI but a scheduling offset is less than a preset threshold, the terminal receives a PDSCH by using a TCI scheduled by a CORESET with a smallest ID. Therefore, a CORESET with a smaller ID is more important to a system, and the CORESET with a smaller ID is preferentially detected to improve system stability. The scheduling offset is a time offset between the reception by the terminal of the downlink DCI and the corresponding PDSCH that is scheduled by the terminal.

### Manner 4

Refer to FIG. 7. The manner 4 includes the following steps.

701. A terminal receives configuration information, where the configuration information includes a CORESET of a current active BWP of the terminal and a BFD RS.

702. If a quantity of CORESETs of the current active BWP of the terminal is greater than a quantity of BFD RSs, the terminal detects, in descending order of priorities of search space sets associated with the CORESETs, whether links of the CORESETs fail.

A priority of a CORESET associated with a CSS is higher than a priority of a CORESET associated with a USS.

In the manner 4, a sequence of the CORESETs for performing link failure detection is determined based on the priorities of the search space sets associated with the CORESETs, so that the terminal can determine a link of which CORESET is to be detected if the quantity of CORESETs of the current active BWP is greater than the quantity of BFD RSs. By preferentially detecting a CORESET in a search space set with a high priority, timely recovery of a link with important information is preferentially ensured, and system performance can be ensured.

In the manner 1 to the manner 4:
The BFD RS can be replaced by a BFD RS resource.

A configuration of the BFD RS resource may be directly explicitly configured by the network apparatus by using RRC signaling or MAC CE signaling, or may be indirectly implicitly configured by the network apparatus by indicating a TCI state (state) of the CORESET (for example, RS resource in type D QCL information indicated by the TCI state of the CORESET is used as the BFD RS resource). Optionally, that the quantity of CORESETs of the current active BWP is greater than the quantity of BFD RSs may be understood as that the quantity of CORESETs of the current active BWP is greater than a quantity of BFD RS resources that is explicitly configured by the network apparatus by using the RRC signaling or the MAC CE signaling. Alternatively, that the quantity of CORESETs of the current active BWP is greater than the quantity of BFD RSs may be understood as that the quantity of CORESETs of the current active BWP is greater than a maximum quantity of BFD RS resources. The maximum quantity of BFD RS resources may be configured by the network apparatus, or may be predefined by a protocol, or may be reported by the terminal (for example, reported by using a terminal capability).

The CORESETs of the current active BWP in the foregoing embodiment may include any plurality of CORESETs in the CORESET #0 to the CORESET #11 mentioned in the foregoing embodiments.

Optionally, a spatial parameter (for example, a TCI or type D QCL) is configured for each CORESET of the current active BWP of the terminal. The CORESETs of the current active BWP do not include a CORESET used to carry link failure recovery response information. Because the CORESET used to carry the link failure recovery response information is used for a procedure after a link failure (optionally, data scheduling is not performed in a normal case, and the CORESET is used only after the link failure), link failure detection does not need to be performed.

Optionally, a BFD RS used to detect a link of one CORESET and the CORESET use same QCL information, that is, at least one RS in the BFD RSs needs to meet a QCL relationship with the CORESET.

It should be noted that the network apparatus may not indicate the QCL information of the BFD RS, but predefines that the BFD RS and the CORESET detected by the BFD RS use same QCL information.

During specific implementation, the CORESETs and the BFD RSs may be mapped one by one in ascending order of IDs. For example, the BFD RSs include an RS 1 and an RS 2, and IDs of the RS 1 and the RS 2 are an ID 1 and an ID 2. In this case, a CORESET 1 whose ID is an ID 1 may be mapped to the RS 1 whose ID is the ID1 (that is, the RS 1 may be used to detect a link of the CORESET 1). A CORESET 2 whose ID is an ID 2 may be mapped to the RS 2 whose ID is the ID 2 (that is, the RS 2 may be used to detect a link of the CORESET 2). Correspondingly, the terminal may receive the RS 1 by using a TCI of the CORESET 1, and receive the RS 2 by using a TCI of the CORESET 2.

Before steps 501, 601, 701, or 801, the network apparatus may configure the CORESET of the current active BWP by using higher layer signaling (for example, RRC signaling), and configure the BFD RS by using the higher layer signaling. Definitely, the BFD RS may alternatively be implicitly indicated, for example, an RS associated with a TCI of a PDCCH is used as a BFD RS, and QCL information of the BFD RS may be type D QCL, and may be a periodically sent RS.

The link failure in this embodiment of this application may also be referred to as a beam failure, a communication link fault, a link fault, a communication link failure, a communication fault, a communication failure, or the like, and the link failure indicates that a BFD RS used for beam failure detection of a PDCCH is less than a preset threshold for W consecutive times (where W is a positive integer) or less than a preset threshold for W times in a specific time period.

The foregoing mainly describes the solutions in the embodiments of this application from a perspective of interaction between the network elements. It may be understood that, to implement the foregoing functions, the network elements such as the network apparatus or the terminal include corresponding hardware structures and/or software modules for performing the functions. A person skilled in the art should be easily aware that units and algorithm steps in the examples described with reference to the embodiments disclosed in this specification can be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that such an implementation goes beyond the scope of this application.

In the embodiments of this application, the network apparatus or the terminal may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in the embodiments of this application, division into units is an example, and is merely logical function division. During actual implementation, another division manner may be used.

When the integrated unit is used, FIG. 8 is a possible schematic structural diagram of the communications apparatus in the foregoing embodiments. The communications apparatus includes a processing unit 801 and a communications unit 802, and may further include a storage unit 803. The schematic structural diagram shown in FIG. 8 may be used to show a structure of the network apparatus or the terminal in the foregoing embodiments.

When the schematic structural diagram shown in FIG. 8 is used to show the structure of the terminal in the foregoing embodiments, the processing unit 801 is configured to control and manage an action of the terminal. For example, the processing unit 801 is configured to support the terminal in performing processes 301 and 302 in FIG. 3, processes in FIG. 4 to FIG. 7, the steps (21) and (22), and/or an action performed by the terminal in another process described in the embodiments of this application. The communications unit 802 is configured to support communication between the terminal and another network entity, for example, communication with the network apparatus shown in FIG. 3. The storage unit 803 is configured to store program code and data of the terminal.

When the schematic structural diagram shown in FIG. 8 is used to show the structure of the network apparatus in the foregoing embodiments, the processing unit 801 is configured to control and manage an action of the network apparatus. For example, the processing unit 801 is configured to support the network apparatus in performing process 302 in FIG. 3, the steps (11) and (12), and/or an action performed by the network apparatus in another process described in the embodiments of this application. The communications unit 802 is configured to support communication between the network apparatus and another network entity, for example, communication with the terminal shown in FIG. 3. The storage unit 803 is configured to store program code and data of the network apparatus.

The processing unit 801 may be a processor or a controller. The communications unit 802 may be a communications interface, a transceiver, a transceiver circuit, or the like, where the communications interface is a general term, and may include one or more interfaces. The storage unit 803 may be a memory.

When the processing unit 801 is a processor, the communications unit 802 is a communications interface, and the storage unit 803 is a memory, the communications apparatus in this embodiment of this application may be the communications apparatus shown in FIG. 2.

When the schematic structural diagram shown in FIG. 2 is used to show the structure of the terminal in the foregoing embodiments, the processor 201 is configured to control and manage an action of the terminal. For example, the processor 201 is configured to support the terminal in performing processes 301 and 302 in FIG. 3, processes in FIG. 4 to FIG. 7, the steps (21) and (22), and/or an action performed by the terminal in another process described in the embodiments of this application. The communications interface 204 is configured to support communication between the terminal and another network entity, for example, communication with the network apparatus shown in FIG. 3. The memory 203 is configured to store program code and data of the terminal.

When the schematic structural diagram shown in FIG. 2 is used to show the structure of the network apparatus in the foregoing embodiments, the processor 201 is configured to control and manage an action of the network apparatus. For example, the processor 201 is configured to support the network apparatus in performing process 302 in FIG. 3, the steps (11) and (12), and/or an action performed by the network apparatus in another process described in the embodiments of this application. The communications interface 204 is configured to support communication between the network apparatus and another network entity, for example, communication with the terminal shown in FIG. 3. The memory 203 is configured to store program code and data of the network apparatus.

The communications apparatus in the embodiments of this application may also be referred to as a communications device. An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a system, including the network apparatus and the terminal in the embodiment shown in FIG. 3. The terminal may be further configured to implement the methods shown in FIG. 4 to FIG. 7.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD for short)), or the like.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a great effect.

Although this application is described with reference to specific features and the embodiments thereof, it is clear that various modifications and combinations may be made to this application without departing from the scope of this application. Correspondingly, the specification and the accompanying drawings are merely example descriptions of this application defined by the appended claims, and are considered as any or all of modifications, variations, combinations, or equivalents that cover the scope of this application. It is clear that a person skilled in the art can make various modifications and variations to this application without departing from the scope of this application. In this way, if these modifications and variations to this application fall within the scope of the claims of this application this application is also intended to cover these modifications and variations.

## Claims

1. An information transmission method, performed by a terminal or a chip in the terminal, comprising:
obtaining (301), first spatial parameter information of a first channel; and
receiving (302), the first channel based on the first spatial parameter information, wherein the first channel is one of a plurality of candidate control channels in a first control resource set, and the first control resource set is configured by using a master information block MIB, a system information block type 1 SIB 1, or a physical downlink control channel PDCCH common configuration parameter,
wherein the first channel carries downlink control information DCI, and a format of the DCI is a first DCI format;
when the terminal meets a first condition, the first DCI format comprises a first field used to indicate a spatial parameter information; and
the first condition is that a second control resource set of a current active bandwidth part BWP of the terminal enables the first field, wherein the second control resource set comprises at least one control resource set other than the first control resource set in control resource sets of the current active BWP of the terminal.

2. The method according to claim 1, wherein
the second control resource set is all control resource sets of the current active BWP of the terminal other than the first control resource set;
the second control resource set is a control resource set with a smallest identifier in all control resource sets of the current active BWP of the terminal other than the first control resource set; or
the second control resource set is a control resource set that is associated with a USS and that is of the current active BWP of the terminal other than the first control resource set.

3. The method according to claim 2,
wherein the control resource set that is associated with the USS and that is of the current active BWP of the terminal other than the first control resource set is:
a control resource set with a smallest identifier in all control resource sets that are associated with the USS and that are of the current active BWP of the terminal other than the first control resource set; or
a control resource set associated with the USS with a smallest identifier in all control resource sets of the current active BWP of the terminal other than the first control resource set.

4. An information transmission method, performed by a network device or a chip in the netword device, comprising:
indicating, first spatial parameter information of a first channel to a terminal; and
sending (302), the first channel to the terminal by using the first spatial parameter information, wherein the first channel is one of a plurality of candidate control channels in a first control resource set, and the first control resource set is configured by using a master information block MIB, a system information block type 1 SIB 1, or a physical downlink control channel PDCCH common configuration parameter;
wherein the first channel carries downlink control information DCI, and a format of the DCI is a first DCI format;
when the terminal meets a first condition, the first DCI format comprises a first field used to indicate a spatial parameter information; and
the first condition is that a second control resource set of a current active bandwidth part BWP of the terminal enables the first field, wherein the second control resource set comprises at least one control resource set other than the first control resource set in control resource sets of the current active BWP of the terminal.

5. The method according to claim 4, wherein
the second control resource set is all control resource sets of the current active BWP of the terminal other than the first control resource set;
the second control resource set is a control resource set with a smallest identifier in all control resource sets of the current active BWP of the terminal other than the first control resource set; or
the second control resource set is a control resource set that is associated with a USS and that is of the current active BWP of the terminal other than the first control resource set.

6. The method according to claim 5,
wherein the control resource set that is associated with the USS and that is of the current active BWP of the terminal other than the first control resource set is:
a control resource set with a smallest identifier in all control resource sets that are associated with the USS and that are of the current active BWP of the terminal other than the first control resource set; or
a control resource set associated with the USS with a smallest identifier in all control resource sets of the current active BWP of the terminal other than the first control resource set.

7. A communications apparatus (80), comprising a communications unit and a processing unit, wherein
the processing unit (801) is configured to obtain first spatial parameter information of a first channel; and
the communications unit (802) is configured to receive the first channel based on the first spatial parameter information; wherein the first channel is one of a plurality of candidate control channels in a first control resource set, and the first control resource set is configured by using a master information block MIB, a system information block type 1 SIB 1, or a physical downlink control channel PDCCH common configuration parameter, wherein the first channel carries downlink control information DCI, and a format of the DCI is a first DCI format;
when the terminal meets a first condition, the first DCI format comprises a first field used to indicate the spatial parameter information; and
the first condition is that a second control resource set of a current active bandwidth part BWP of the terminal enables the first field, wherein the second control resource set comprises at least one control resource set other than the first control resource set in control resource sets of the current active BWP of the terminal.

8. The communications apparatus according to claim 7, wherein
the second control resource set is all control resource sets of the current active BWP of the terminal other than the first control resource set;
the second control resource set is a control resource set with a smallest identifier in all control resource sets of the current active BWP of the terminal other than the first control resource set; or
the second control resource set is a control resource set that is associated with a USS and that is of the current active BWP of the terminal other than the first control resource set.

9. The communications apparatus according to claim 8,
wherein the control resource set that is associated with the USS and that is of the current active BWP of the terminal other than the first control resource set is:
a control resource set with a smallest identifier in all control resource sets that are associated with the USS and that are of the current active BWP of the terminal other than the first control resource set; or
a control resource set associated with the USS with a smallest identifier in all control resource sets of the current active BWP of the terminal other than the first control resource set.

## Patentansprüche

1. Informationsübertragungsverfahren, das von einem Endgerät oder einem Chip in dem Endgerät durchgeführt wird, umfassend:
Erlangen (301) von ersten Raumparameterinformationen eines ersten Kanals; und
Empfangen (302) des ersten Kanals basierend auf den ersten Raumparameterinformationen, wobei der erste Kanal ein Kanal aus einer Vielzahl von Kandidatensteuerkanälen in einem ersten Steuerressourcensatz ist und der erste Steuerressourcensatz unter Verwendung eines Masterinformationenblocks (MIB), eines Systeminformationenblocks des Typs 1 (SIB 1) oder eines gemeinsamen Konfigurationsparameters von physischen Downlink-Steuerkanälen (PDCCH) konfiguriert wird;
wobei der erste Kanal Downlink-Steuerinformationen (DCI) überträgt und ein Format der DCI ein erstes DCI-Format ist;
wenn das Endgerät eine erste Bedingung erfüllt, das erste DCI-Format ein erstes Feld umfasst, das dazu verwendet wird, Raumparameterinformationen anzugeben; und
die erste Bedingung darin besteht, dass
ein zweiter Steuerressourcensatz eines aktuellen aktiven Bandbreitenteils (BWP) des Endgeräts das erste Feld aktiviert, wobei der zweite Steuerressourcensatz mindestens einen Steuerressourcensatz umfasst, der nicht der erste Steuerressourcensatz in den Steuerressourcensätzen des aktuellen aktiven Bandbreitenteils (BWP) des Endgeräts ist.

2. Verfahren nach Anspruch 1, wobei
der zweite Steuerressourcensatz alle Steuerressourcensätze des aktuellen aktiven BWP des Endgeräts, die nicht der erste Steuerressourcensatz sind, ist;
der zweite Steuerressourcensatz ein Steuerressourcensatz mit einer kleinsten Kennung aus allen Steuerressourcensätzen des aktuellen aktiven BWP des Endgeräts ist, der nicht der erste Steuerressourcensatz ist; oder
der zweite Steuerressourcensatz ein einem USS zugeordneter und zu dem aktuellen aktiven BWP des Endgeräts gehörender Steuerressourcensatz ist, der nicht der erste Steuerressourcensatz ist.

3. Verfahren nach Anspruch 2, wobei der dem USS zugeordnete und zu dem aktuellen aktiven BWP des Endgeräts gehörende Steuerressourcensatz, der nicht der erste Steuerressourcensatz ist, Folgendes ist:
ein Steuerressourcensatz mit einer kleinsten Kennung aus allen dem USS zugeordneten und zu dem aktuellen aktiven BWP des Endgeräts gehörenden Steuerressourcensätzen, der nicht der erste Steuerressourcensatz ist; oder
ein dem USS zugeordneter Steuerressourcensatz mit einer kleinsten Kennung aus allen Steuerressourcensätzen des aktuellen aktiven BWP des Endgeräts, der nicht der erste Steuerressourcensatz ist.

4. Informationsübertragungsverfahren, das von einer Netzwerkvorrichtung oder einem Chip in der Netzwerkvorrichtung durchgeführt wird und Folgendes umfasst:
einem Endgerät Angeben von ersten Raumparameterinformationen eines ersten Kanals; und
Senden (302) des ersten Kanals an das Endgerät unter Verwendung der ersten Raumparameterinformationen, wobei der erste Kanal ein Kanal aus einer Vielzahl von Kandidatensteuerkanälen in einem ersten Steuerressourcensatz ist und der erste Steuerressourcensatz unter Verwendung eines Masterinformationenblocks (MIB), eines Systeminformationenblocks des Typs 1 (SIB 1) oder eines gemeinsamen Konfigurationsparameters von physischen Downlink-Steuerkanälen (PDCCH) konfiguriert wird;
wobei der erste Kanal Downlink-Steuerinformationen (DCI) überträgt und ein Format der DCI ein erstes DCI-Format ist;
wenn das Endgerät eine erste Bedingung erfüllt, das erste DCI-Format ein erstes Feld umfasst, das dazu verwendet wird, Raumparameterinformationen anzugeben; und
die erste Bedingung darin besteht, dass
ein zweiter Steuerressourcensatz eines aktuellen aktiven Bandbreitenteils (BWP) des Endgeräts das erste Feld aktiviert, wobei der zweite Steuerressourcensatz mindestens einen Steuerressourcensatz umfasst, der nicht der erste Steuerressourcensatz in den Steuerressourcensätzen des aktuellen aktiven Bandbreitenteils (BWP) des Endgeräts ist.

5. Verfahren nach Anspruch 4, wobei
der zweite Steuerressourcensatz alle Steuerressourcensätze des aktuellen aktiven BWP des Endgeräts, die nicht der erste Steuerressourcensatz sind, ist;
der zweite Steuerressourcensatz ein Steuerressourcensatz mit einer kleinsten Kennung aus allen Steuerressourcensätzen des aktuellen aktiven BWP des Endgeräts ist, der nicht der erste Steuerressourcensatz ist; oder
der zweite Steuerressourcensatz ein einem USS zugeordneter und zu dem aktuellen aktiven BWP des Endgeräts gehörender Steuerressourcensatz ist, der nicht der erste Steuerressourcensatz ist.

6. Verfahren nach Anspruch 5,
wobei der dem USS zugeordnete und zu dem aktuellen aktiven BWP des Endgeräts gehörende Steuerressourcensatz, der nicht der erste Steuerressourcensatz ist, Folgendes ist:
ein Steuerressourcensatz mit einer kleinsten Kennung aus allen dem USS zugeordneten und zu dem aktuellen aktiven BWP des Endgeräts gehörenden Steuerressourcensätzen, der nicht der erste Steuerressourcensatz ist; oder
ein dem USS zugeordneter Steuerressourcensatz mit einer kleinsten Kennung aus allen Steuerressourcensätzen des aktuellen aktiven BWP des Endgeräts, der nicht der erste Steuerressourcensatz ist.

7. Kommunikationsvorrichtung (80), die eine Kommunikationseinheit und eine Verarbeitungseinheit umfasst, wobei
die Verarbeitungseinheit (801) dazu konfiguriert ist, erste Raumparameterinformationen eines ersten Kanals zu erlangen; und die Kommunikationseinheit (802) dazu konfiguriert ist, den ersten Kanal basierend auf den ersten Raumparameterinformationen zu empfangen; wobei der erste Kanal ein Kanal aus einer Vielzahl von Kandidatensteuerkanälen in einem ersten Steuerressourcensatz ist und der erste Steuerressourcensatz unter Verwendung eines Masterinformationenblocks (MIB), eines Systeminformationenblocks des Typs 1 (SIB 1) oder eines gemeinsamen Konfigurationsparameters von physischen Downlink-Steuerkanälen (PDCCH) konfiguriert wird, wobei der erste Kanal Downlink-Steuerinformationen (DCI) überträgt und ein Format der DCI ein erstes DCI-Format ist;
wenn das Endgerät eine erste Bedingung erfüllt, das erste DCI-Format ein erstes Feld umfasst, das dazu verwendet wird, die Raumparameterinformationen anzugeben; und
die erste Bedingung darin besteht, dass
ein zweiter Steuerressourcensatz eines aktuellen aktiven Bandbreitenteils (BWP) des Endgeräts das erste Feld aktiviert, wobei der zweite Steuerressourcensatz mindestens einen Steuerressourcensatz umfasst, der nicht der erste Steuerressourcensatz in den Steuerressourcensätzen des aktuellen aktiven Bandbreitenteils (BWP) des Endgeräts ist.

8. Kommunikationsvorrichtung nach Anspruch 7, wobei
der zweite Steuerressourcensatz alle Steuerressourcensätze des aktuellen aktiven BWP des Endgeräts, die nicht der erste Steuerressourcensatz sind, ist;
der zweite Steuerressourcensatz ein Steuerressourcensatz mit einer kleinsten Kennung aus allen Steuerressourcensätzen des aktuellen aktiven BWP des Endgeräts ist, der nicht der erste Steuerressourcensatz ist; oder
der zweite Steuerressourcensatz ein einem USS zugeordneter und zu dem aktuellen aktiven BWP des Endgeräts gehörender Steuerressourcensatz ist, der nicht der erste Steuerressourcensatz ist.

9. Kommunikationsvorrichtung nach Anspruch 8, wobei der dem USS zugeordnete und zu dem aktuellen aktiven BWP des Endgeräts gehörende Steuerressourcensatz, der nicht der erste Steuerressourcensatz ist, Folgendes ist:
ein Steuerressourcensatz mit einer kleinsten Kennung aus allen dem USS zugeordneten und zu dem aktuellen aktiven BWP des Endgeräts gehörenden Steuerressourcensätzen, der nicht der erste Steuerressourcensatz ist; oder
ein dem USS zugeordneter Steuerressourcensatz mit einer kleinsten Kennung aus allen Steuerressourcensätzen des aktuellen aktiven BWP des Endgeräts, der nicht der erste Steuerressourcensatz ist.

## Revendications

1. Procédé de transmission d'informations réalisé par un terminal ou une puce dans le terminal, comprenant :
l'obtention (301) de premières informations de paramètres spatiaux d'un premier canal ; et
la réception (302) du premier canal sur la base des premières informations de paramètres spatiaux, dans lequel le premier canal est l'un d'une pluralité de canaux de commande candidats dans un premier ensemble de ressources de commande, et le premier ensemble de ressources de commande est configuré à l'aide d'un bloc d'informations maître, MIB, d'un bloc d'informations système de type 1, SIB 1, ou d'un paramètre de configuration commun de canal de commande de liaison descendante physique, PDCCH ;
dans lequel le premier canal transporte des informations de commande de liaison descendante, DCI, et un format des DCI est un premier format DCI ;
lorsque le terminal remplit une première condition, le premier format DCI comprend un premier champ utilisé pour indiquer une information de paramètres spatiaux ; et
la première condition est
un second ensemble de ressources de commande d'une partie de bande passante, BWP, active actuelle du terminal active le premier champ, dans lequel le second ensemble de ressources de commande comprend au moins un ensemble de ressources de commande autre que le premier ensemble de ressources de commande dans les ensembles de ressources de commande de la BWP active actuelle du terminal.

2. Procédé selon la revendication 1, dans lequel
le second ensemble de ressources de commande est constitué de tous les ensembles de ressources de commande de la BWP active actuelle du terminal autres que le premier ensemble de ressources de commande ;
le second ensemble de ressources de commande est un ensemble de ressources de commande avec un plus petit identifiant dans tous les ensembles de ressources de commande de la BWP active actuelle du terminal autre que le premier ensemble de ressources de commande ; ou
le second ensemble de ressources de commande est un ensemble de ressources de commande qui est associé à un USS et qui est de la BWP active actuelle du terminal autre que le premier ensemble de ressources de commande.

3. Procédé selon la revendication 2, dans lequel l'ensemble de ressources de commande qui est associé à l'USS et qui est de la BWP active actuelle du terminal autre que le premier ensemble de ressources de commande est :
un ensemble de ressources de commande avec un plus petit identifiant dans tous les ensembles de ressources de commande qui sont associés à l'USS et qui sont de la BWP active actuelle du terminal autre que le premier ensemble de ressources de commande ; ou
un ensemble de ressources de commande associé à l'USS avec un plus petit identifiant dans tous les ensembles de ressources de commande de la BWP active actuelle du terminal autre que le premier ensemble de ressources de commande.

4. Procédé de transmission d'informations réalisé par un dispositif réseau ou une puce dans le dispositif réseau, comprenant :
l'indication de premières informations de paramètres spatiaux d'un premier canal à un terminal ; et
l'envoi (302) du premier canal au terminal à l'aide des premières informations de paramètres spatiaux, dans lequel le premier canal est l'un d'une pluralité de canaux de commande candidats dans un premier ensemble de ressources de commande, et le premier ensemble de ressources de commande est configuré à l'aide d'un bloc d'informations maître, MIB, d'un bloc d'informations système de type 1, SIB 1, ou d'un paramètre de configuration commun de canal de commande de liaison descendante physique, PDCCH ;
dans lequel le premier canal transporte des informations de commande de liaison descendante, DCI, et un format des DCI est un premier format DCI ;
lorsque le terminal remplit une première condition, le premier format DCI comprend un premier champ utilisé pour indiquer une information de paramètres spatiaux ; et
la première condition est
un second ensemble de ressources de commande d'une partie de bande passante, BWP, active actuelle du terminal active le premier champ, dans lequel le second ensemble de ressources de commande comprend au moins un ensemble de ressources de commande autre que le premier ensemble de ressources de commande dans les ensembles de ressources de commande de la BWP active actuelle du terminal.

5. Procédé selon la revendication 4, dans lequel
le second ensemble de ressources de commande est constitué de tous les ensembles de ressources de commande de la BWP active actuelle du terminal autres que le premier ensemble de ressources de commande ;
le second ensemble de ressources de commande est un ensemble de ressources de commande avec un plus petit identifiant dans tous les ensembles de ressources de commande de la BWP active actuelle du terminal autre que le premier ensemble de ressources de commande ; ou
le second ensemble de ressources de commande est un ensemble de ressources de commande qui est associé à un USS et qui est de la BWP active actuelle du terminal autre que le premier ensemble de ressources de commande.

6. Procédé selon la revendication 5,
dans lequel l'ensemble de ressources de commande associé à l'USS et qui est de la BWP active actuelle du terminal autre que le premier ensemble de ressources de commande est :
un ensemble de ressources de commande avec un plus petit identifiant dans tous les ensembles de ressources de commande qui sont associés à l'USS et qui sont de la BWP active actuelle du terminal autre que le premier ensemble de ressources de commande ; ou
un ensemble de ressources de commande associé à l'USS avec un plus petit identifiant dans tous les ensembles de ressources de commande de la BWP active actuelle du terminal autre que le premier ensemble de ressources de commande.

7. Appareil de communication (80), comprenant une unité de communication et une unité de traitement, dans lequel
l'unité de traitement (801) est configurée pour obtenir des premières informations de paramètres spatiaux d'un premier canal ; et
l'unité de communication (802) est configurée pour recevoir le premier canal sur la base des premières informations de paramètres spatiaux ; dans lequel le premier canal est l'un d'une pluralité de canaux de commande candidats dans un premier ensemble de ressources de commande, et le premier ensemble de ressources de commande est configuré à l'aide d'un bloc d'informations maître, MIB, d'un bloc d'informations système de type 1, SIB 1, ou d'un paramètre de configuration commun de canal de commande de liaison descendante physique, PDCCH, dans lequel le premier canal transporte des informations de commande de liaison descendante, DCI, et un format des DCI est un premier format DCI ;
lorsque le terminal remplit une première condition, le premier format DCI comprend un premier champ utilisé pour indiquer les informations de paramètres spatiaux ; et
la première condition est
un second ensemble de ressources de commande d'une partie de bande passante, BWP, active actuelle du terminal active le premier champ, dans lequel le second ensemble de ressources de commande comprend au moins un ensemble de ressources de commande autre que le premier ensemble de ressources de commande dans les ensembles de ressources de commande de la BWP active actuelle du terminal.

8. Appareil de communication selon la revendication 7, dans lequel
le second ensemble de ressources de commande est constitué de tous les ensembles de ressources de commande de la BWP active actuelle du terminal autres que le premier ensemble de ressources de commande ;
le second ensemble de ressources de commande est un ensemble de ressources de commande avec un plus petit identifiant dans tous les ensembles de ressources de commande de la BWP active actuelle du terminal autre que le premier ensemble de ressources de commande ; ou
le second ensemble de ressources de commande est un ensemble de ressources de commande qui est associé à un USS et qui est de la BWP active actuelle du terminal autre que le premier ensemble de ressources de commande.

9. Appareil de communication selon la revendication 8, dans lequel l'ensemble de ressources de commande qui est associé à l'USS et qui est de la BWP active actuelle du terminal autre que le premier ensemble de ressources de commande est :
un ensemble de ressources de commande avec un plus petit identifiant dans tous les ensembles de ressources de commande qui sont associés à l'USS et qui sont de la BWP active actuelle du terminal autre que le premier ensemble de ressources de commande ; ou
un ensemble de ressources de commande associé à l'USS avec un plus petit identifiant dans tous les ensembles de ressources de commande de la BWP active actuelle du terminal autre que le premier ensemble de ressources de commande.
